# EUROPÄISCHE PATENTSCHRIFT

(11) **EP 1 636 960 B1**
(45) Veröffentlichungstag und Bekanntmachung des Hinweises auf die Patenterteilung: **03.06.2009**
(21) Anmeldenummer: 04725331.5
(22) Anmeldetag: 02.04.2004
(51) Int. Cl.: H04L 29/06, G05B 19/418, G06F 17/30

(54) **AUTOMATISIERUNGSSYSTEM MIT VEREINFACHTER DIAGNOSE UND FEHLERBEHEBUNG**
AUTOMATION SYSTEM WITH SIMPLIFIED DIAGNOSIS AND RECTIFICATION OF ERRORS
SYSTEME D'AUTOMATISATION A DIAGNOSTIC ET CORRECTION D'ERREURS SIMPLIFIES

(30) Priorität: 07.05.2003 DE 20307101 U
(43) Veröffentlichungstag der Anmeldung: 22.03.2006
(73) Patentinhaber: SIEMENS AKTIENGESELLSCHAFT, 80333 München (DE)
(72) Erfinder: WIEDENBERG, Peter, 90537 Feucht (DE); WOLF, Rene, 90402 Nürnberg (DE)
(86) Internationale Anmeldenummer: PCT/EP2004/003534
(87) Internationale Veröffentlichungsnummer: WO 2004/100488

(56) Entgegenhaltungen:
- EP-A- 0 964 325
- WO-A-01/50704
- US-A- 6 112 246
- US-A1- 2002 095 644
- US-A1- 2002 120 671
- US-B2- 6 701 285

## Beschreibung

Automatisierungssystem mit vereinfachter Diagnose und Fehlerbehebung

Die Erfindung betrifft ein Automatisierungssystem mit vereinfachter Diagnose und Fehlerbehebung.

Automatisierungssysteme, die eine Vielzahl von Teilnehmern aufweisen, welche an einen gemeinsamen Kommunikationskanal angeschlossen sind, sind bereits bekannt.

Weiterhin ist es bereits bekannt, bezüglich der Teilnehmer derartiger Automatisierungssysteme im Rahmen der Projektierung des Systems Diagnoseinformationen manuell zu erstellen und zu hinterlegen. Dieses manuelle Erstellen von Diagnoseinformationen ist sehr zeitaufwendig. Eine Behebung von erkannten Fehlern erfolgt vor Ort unter Verwendung von Programmen, die vom jeweiligen Teilnehmer abhängig sind.

Aus der US 2002/0120671 A1 sind eine Vorrichtung und ein Verfahren zur Datenkommunikation, insbesondere zur Parametrisierung und Fernüberwachung von Heizungsanlagen, bekannt. Bei dieser bekannten Vorrichtung sind eine Vielzahl von Teilnehmern an einen gemeinsamen Bus angeschlossen. Die Busteilnehmer können Meldungen zu Diagnosezwecken übertragen. An den Bus ist weiterhin ein Protokollkonverter angeschlossen, der über ein Modem mit dem Internet verbunden ist. Weiterhin ist an das Internet über ein weiteres Modem ein Systemrechner angeschlossen, welcher eine Datenbank aufweist. Tritt in einem der Teilnehmer ein Fehler auf, dann wird das Auftreten dieses Fehlers über das Internet und/oder eine andere Datenverbindung an eine Bedienperson gemeldet.

Aus der US 6,112,246 A sind ein System und ein Verfahren zum Zugreifen auf Informationen einer entfernt angeordneten Vorrichtung und zur Übertragung dieser Informationen an eine Client-Workstation bekannt. Bei diesem bekannten Verfahren ist in die über einen Bus oder das Ethernet verbundenen Teilnehmer jeweils ein Mikro-Server integriert, welcher Zugang zu Daten des Teilnehmers ermöglicht, beispielsweise unter Verwendung von Webseiten. Die Daten der Teilnehmer werden auf Abruf oder zyklisch an einen entfernt angeordneten Client übertragen. Der Mikro-Server stellt die Daten des jeweiligen Teilnehmers derart um, dass sie einem Kommunikationsprotokoll entsprechen.

Aus der EP 0964 325 A1 ist ein Verfahren bekannt, bei welchem Diagnosedaten von Vorrichtungen eines Prozessautomatisierungssystems über ein Feld-Kommunikations-Interface unter Verwendung eines Feld-Kommunikations-Protokolls gesammelt werden. Weiterhin werden Zustandsdaten der Feldvorrichtungen an eine andere Applikation des Automatisierungssystems übertragen, beispielsweise an die Kontrollraum-Software oder eine Management-Software. Dies geschieht unabhängig vom Typ der Feldvorrichtung.

Aus der US 2002/0095644 A1 ist eine webbasierte Werkzeugkontrolle im Zusammenhang mit der Halbleiterherstellung bekannt. Die dort beschriebene Erfindung offenbart ein System zur Verbindung von Halbleiterherstellungswerkzeugen unter Verwendung eines Datennetzwerks und eines mikroprozessorbasierten Interfaces, das jedem Prozesswerkzeug zugeordnet ist. Das Datennetzwerk und das Interface sorgen für eine Kommunikation gemäß bekannter Standards über Intranet- oder Internetverbindungen zu einem oder mehreren entfernt angeordneten Browsern. Die beim Prozess anfallenden Daten sind in Echtzeit auf dem Netzwerk verfügbar und können von einem Bediener an beliebiger Stelle des Netzwerks abgerufen werden.

Die Aufgabe der Erfindung besteht darin, ein Automatisierungssystem anzugeben, bei welchem die Nachteile der bekannten Systeme nicht auftreten.

Diese Aufgabe wird durch ein Automatisierungssystem mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass durch die automatische Bereitstellung von Diagnoseinformationen seitens jedes Teilnehmers, insbesondere auch seitens jedes neu an das System angeschlossenen Teilnehmers, eine über ein beliebiges Netzwerk, insbesondere über das Internet oder ein Intranet, mit dem Automatisierungssystem verbundene Servicestation sich schnell und einfach einen Überblick über alle verfügbaren Diagnosedaten der Systemteilnehmer verschaffen und bei Bedarf Fehlerbehebungsinformationen an das Automatisierungssystem zurückübertragen kann. Da die Diagnosedaten, die die einzelnen Systemteilnehmer betreffen, in einem einheitlichen Format vorliegen, ist der Überblick über die verfügbaren Diagnosedaten besonders übersichtlich. Diese Vorteile werden insbesondere dadurch erreicht, dass die Diagnoseinformationen der Teilnehmer automatisch in einem einheitlichen Standardformat bzw. einem interpretierbaren Format zur Verfügung gestellt werden und dass die Umwandlungsstation die übertragenen Diagnosedaten unabhängig von der jeweiligen Quelle der Diagnoseinformationen mittels eines Web-Servers in ein einheitliches Format umsetzt, welches zu einer Übertragung über das vorliegende Netzwerk zur Servicestation geeignet ist.

Vorzugsweise werden die Diagnoseinformationen zunächst in ein Standardformat umgesetzt, bei welchem es sich um das XML-Format handelt. Das XML-Format (Extensible Markup Language) entspricht einer Metasprache, die textbasiert zu übertragende Daten beschreibt. Diese Metasprache wurde ursprünglich zu dem Zweck geschaffen, Dokumente einfach zu strukturieren, da ein Vorliegen von strukturierten Daten bei einem Datenaustausch vorteilhaft ist. Dieses an sich bekannte XML-Format wird in vorteilhafter Weise bei der vorliegenden Erfindung dazu verwendet, in einem Automatisierungssystem Diagnosedaten der einzelnen Teilnehmer des Systems in einem einheitlichen Format zur Verfügung zu stellen. Die im XML-Format vorliegenden Diagnoseinformationen werden dann mittels eines Web-Servers in zu einer Netzwerkübertragung geeignete Signale umgesetzt.

Ein Automatisierungssystem mit den im Anspruch 5 angegebenen Merkmalen hat den Vorteil, dass die Servicestation unmittelbar nach dem Anschließen eines neuen Teilnehmers an den Kommunikationskanal automatisch Kenntnis von dem neuen Teilnehmer erlangt und auch Informationen über dessen Identität erhält. Ein manuell erfolgendes Anmelden eines neuen Teilnehmers bzw. ein manuelles Konfigurieren entfällt.

Eine Darstellung der am Display angezeigten Diagnoseinformationen in Form einer grafischen Darstellung oder einer Liste, wie sie Gegenstand des Anspruchs 6 ist, verbessert für den Bediener die Übersichtlichkeit über die von den Teilnehmern zur Verfügung gestellten Diagnoseinformationen.

Eine Darstellung der am Display angezeigten Diagnoseinformationen, in welcher die verschiedenen Teilnehmern zugehörigen Diagnoseinformationen gemäß den Merkmalen des Anspruchs 7 in einem einheitlichen Anzeigeformat angezeigt werden, verbessert die Übersichtlichkeit über die von den Teilnehmern zur Verfügung gestellten Diagnoseinformationen weiter.

Die Vorteile der Merkmale des Anspruchs 8 bestehen darin, dass von verschiedenen Herstellern stammende Teilnehmergeräte an den gemeinsamen Kommunikationskanal angeschlossen werden können und dabei dennoch die Einheitlichkeit der Displaydarstellung der Diagnoseinformationen gewahrt bleibt.

Stellen die an den Kommunikationskanal angeschlossenen Teilnehmer ihre Diagnoseinformationen im Sinne der Merkmale des Anspruchs 9 ständig zur Verfügung, dann hat die Servicestation ständigen Zugriff auf die Diagnosedaten aller an den Kommunikationskanal angeschlossenen Teilnehmer.

Die Merkmale des Anspruchs 10 sind insbesondere dann von Vorteil, wenn die Umwandlungsstation in Form eines Notebooks realisiert ist. Ein derartiges tragbares Gerät kann an beliebiger Stelle des Automatisierungssystems, dessen Teilnehmer örtlich weit verstreut angeordnet sein können, an den gemeinsamen Kommunikationskanal angeschlossen werden. Die gewünschte Übersicht über die Diagnoseinformationen aller Teilnehmer steht an allen Zugangsstellen des gemeinsamen Kommunikationskanals zur Verfügung.

Mit den Merkmalen des Anspruchs 11 ist in vorteilhafter Weise eine Selektion durchführbar, aufgrund welcher nur selektierten Teilnehmern zugehörige Diagnoseinformationen auf dem Display dargestellt werden. Beispielsweise kann die Selektion darin bestehen, nur die den im Automatisierungssystem enthaltenen Reglern zugehörigen Diagnoseinformationen oder nur die den im Automatisierungssystem enthaltenen Kesseln zugehörigen Diagnoseinformationen auf dem Display anzuzeigen. Dies erhöht insbesondere dann, wenn die Zahl der Teilnehmer des Automatisierungssystem groß ist, die Übersichtlichkeit über momentan gewünschte Diagnoseinformationen weiter.

Der Vorteil der im Anspruch 12 angegebenen Bedieneinheit besteht darin, dass der Bediener selbst Selektionskriterien vorgeben kann. Dies ist beispielsweise dann von Vorteil, wenn sich im Laufe eines Prozesses zeigt, dass ein oder mehrere bestimmte Teilnehmer besonders störanfällig sind und deshalb ständig beobachtet werden müssen.

Weitere vorteilhafte Eigenschaften der Erfindung ergeben sich aus deren beispielhafter Erläuterung anhand der Figuren. Es zeigt:
- Figur 1: eine Blockdarstellung eines Automatisierungssystems,
- Figur 2: eine Blockdarstellung eines Teilnehmers des in Figur 1 gezeigten Automatisierungssystems,
- Figur 3: eine Blockdarstellung eines ersten Ausführungsbeispiels für die Umwandlungsstation 1 von Figur 1 und
- Figur 4: eine Blockdarstellung eines zweiten Ausführungsbeispiels für die Umwandlungsstation 1 von Figur 1 sowie eines Ausführungsbeispiels für die Servicestation 9 von Figur 1.

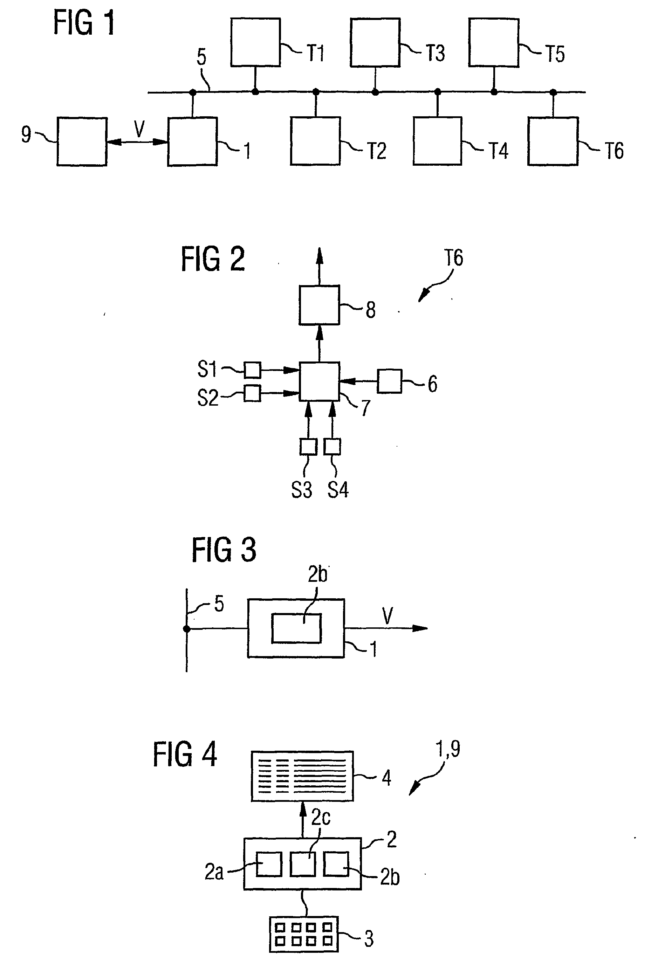

Die Figur 1 zeigt eine Blockdarstellung eines Automatisierungssystems. Dieses weist Teilnehmer T1, T2, T3, T4, T5 und T6 auf, die an einen gemeinsamen Kommunikationskanal 5 angeschlossen sind. Die genannten Teilnehmer können örtlich weit getrennt voneinander angeordnet sein. Zu diesen Teilnehmern gehören beispielsweise die Regler, Kessel, Ventile und Roboter einer Industrieanlage, die zur Fertigung eines Produktes vorgesehen ist. Weiterhin ist an den Kommunikationskanal 5 eine Umwandlungsstation 1 angeschlossen. Diese Umwandlungsstation kann in einer Leitzentrale des Automatisierungssystems angeordnet sein. Alternativ oder zusätzlich dazu kann eine Umwandlungsstation auch ein tragbares Gerät sein, beispielsweise ein Notebook, welches an einer beliebigen Stelle des Kommunikationskanals 5 an diesen angeschlossen werden kann. Bei dem gemeinsamen Kommunikationskanal 5 handelt es sich um das Ethernet (LAN/WAN) oder um einen Bus, über welchen die Teilnehmer T1,...,T6 und die Umwandlungsstation 1 miteinander verbunden sind. An diesem Kommunikationskanal sind ständig die den einzelnen Teilnehmern zugehörigen Diagnoseinformationen verfügbar, so dass die Umwandlungsstation 1 ständig Zugriff zu allen Diagnoseinformationen des Systems hat. Die Umwandlungsstation 1 ist über ein Netzwerk V mit einer Servicestation 9 verbunden. Insbesondere handelt es sich bei diesem Netzwerk um das Internet oder um ein Intranet. Im Folgenden wird davon ausgegangen, dass es sich beim Netzwerk V um das Internet handelt, so dass die Umwandlungsstation 1 über eine Internetverbindung mit der Servicestation 9 verbunden ist.

Jeder der an den Kommunikationskanal angeschlossenen Teilnehmer stellt seine Diagnoseinformationen selbstständig und automatisch zur Verfügung. Die von den Teilnehmern zur Verfügung gestellten Diagnoseinformationen weisen gemäß einer ersten Ausführungsform der Erfindung ein und dasselbe Standardformat auf. Dies gilt unabhängig davon, von welchem Hersteller das jeweilige Teilnehmergerät hergestellt wurde. Folglich können gemäß der Erfindung Teilnehmer unterschiedlicher Hersteller in ein und demselben Automatisierungssystem eingesetzt werden, sofern alle diese Teilnehmer die von ihnen zur Verfügung gestellten Diagnoseinformationen in dem einheitlichen Standardformat bereitstellen.

Bei diesem einheitlichen Standardformat handelt es sich vorzugsweise um das XML-Format. Dieses entspricht einer Metasprache, die textbasiert zu übertragende Daten beschreibt. Diese Metasprache, die ursprünglich zu dem Zweck geschaffen wurde, Dokumente einfach zu strukturieren, wird bei dieser ersten Ausführungsform der Erfindung dazu verwendet, Diagnoseinformationen in einem einheitlichen Format auf dem Kommunikationskanal 5 eines Automatisierungssystems zur Verfügung zu stellen.

Die von den Teilnehmern auf dem Kommunikationskanal bereitgestellten Diagnoseinformationen werden in der Umwandlungsstation 1 unter Verwendung eines Web-Servers in ein Format umgewandelt, in welchem die Diagnoseinformationen über das Internet übertragbar sind.

Die Figur 2 zeigt eine Blockdarstellung des Teilnehmers T6 des in der Figur 1 gezeigten Automatisierungssystems. Der Teilnehmer T6 weist einen Speicher 6 auf, in welchem Kennsignale abgespeichert sind, die den Teilnehmer identifizieren. Zu diesen Kennsignalen gehören eine Angabe des Typs des Teilnehmers, Angaben über technische Daten des Teilnehmers und Angaben über den Hersteller des Teilnehmers. Weiterhin weist der Teilnehmer T6 eine Steuereinheit 7 auf, die Zugriff auf die im Speicher 6 abgelegten Daten hat. Der Steuereinheit 7 werden weiterhin von Sensoren S1, S2, S3 und S4 generierte Sensorsignale zugeführt. Diese enthalten Informationen über den Zustand einzelner Komponenten des Teilnehmers T6. Die Steuereinheit 7 fasst die aus dem Speicher 6 gelesenen Kennsignale mit den von den Sensoren abgeleiteten Sensorsignalen zu einer dem Teilnehmer T6 zugehörigen Diagnoseinformation zusammen und leitet sie einem Konverter, vorzugsweise einem XML-Editor 8 zu. Dieser wandelt die von der Steuereinheit 7 gelieferten Signale in das XML-Format um und stellt die im XML-Format vorliegenden Diagnoseinformationen dem Kommunikationskanal 5 zur Verfügung.

Die weiteren Teilnehmer T1,...,T5 sind ähnlich aufgebaut wie der Teilnehmer T6. Insbesondere weist jeder dieser Teilnehmer ebenfalls einen XML-Editor auf, der die Diagnoseinformationen des jeweiligen Teilnehmers dem Kommunikationskanal 5 im XML-Format zur Verfügung stellt.

Die Figur 3 zeigt eine Blockdarstellung eines ersten Ausführungsbeispiels für die Umwandlungsstation 1 von Figur 1. Bei diesem ersten Ausführungsbeispiel hat die Umwandlungsstation 1 im wesentlichen die Aufgabe, die von den Teilnehmern T1,...,T6 im XML-Format angelieferten Diagnoseinformationen mittels eines Web-Servers 2b in ein Format umzuwandeln, das für eine Internetübertragung geeignet ist. Die Ausgangssignale des Web-Servers 2b der Umwandlungsstation 1 werden über die Internetverbindung V an die Servicestation 9 übertragen.

In der Servicestation 9 wird im Rahmen der Prozessdiagnose beim Vorliegen eines Fehlers beispielsweise festgestellt, warum eine einen Roboter betreffende Verfahrposition nicht erreicht wird. Durch die Anzeige der Diagnoseinformationen ist es einem Servicespezialisten, der in der Servicestation am Bildschirm sitzt, möglich, die Fehlerursache zu lokalisieren und Fehlerbehebungen vorzuschlagen. Alternativ dazu ist auch eine automatische Ausgabe von Fehlerbehebungsdaten und deren Übertragung über die Internetverbindung 9 und den Kommunikationskanal 5 an den fehlerhaft arbeitenden Teilnehmer möglich.

Die Figur 4 zeigt eine Blockdarstellung eines zweiten Ausführungsbeispiels für die Umwandlungsstation 1 von Figur 1. Dieselbe Ausgestaltung kann auch die Servicestation 9 aufweisen. Gemäß der Figur 4 weist die Umwandlungsstation eine Bedientastatur 3, eine Recheneinheit 2 und ein Display 4 auf. Auf dem Display 4 werden die von den Teilnehmern zur Verfügung gestellten Diagnoseinformationen angezeigt.

Die auf dem Kommunikationskanal 5 im XML-Format vorliegenden Diagnoseinformationen werden der Recheneinheit 2 zugeführt. Diese weist einen Web-Server 2b auf, dessen Aufgabe darin besteht, die im XML-Format vorliegenden Diagnoseinformationen unabhängig vom Hersteller des jeweiligen Teilnehmers in ein einheitliches Format umzuwandeln, welches zu einer Übertragung der Diagnoseinformationen über das Internet geeignet ist. An den Ausgang des Web-Servers 2b ist ein Web-Browser angeschlossen, der die vom Web-Server generierten Signale in ein einheitliches Anzeigeformat für das Display 4 umsetzt.

Die vom Ausgang des Web-Servers 2b abgeleiteten, über die Internetverbindung V übertragenen Diagnoseinformationen werden in der Servicestation 9 dem dort vorgesehenen Web-Browser zugeführt und in diesem in ein einheitliches Anzeigeformat für das Display der Servicestation umgesetzt. Dort erfolgt eine Darstellung der Serviceinformationen in Form einer Liste. Beispielsweise ist in der Liste jedem Teilnehmer eine eigene Anzeigezeile zugeordnet. In der Zeile 1 der Liste werden folglich die Diagnoseinformationen eines ersten gestörten Teilnehmers dargestellt. In der Zeile 2 der Liste werden die Diagnoseinformationen eines zweiten gestörten Teilnehmers dargestellt, usw.. Innerhalb jeder Displayzeile sind verschiedene Bereiche vorgesehen, wobei in einem ersten Bereich eine laufende Nummer, in einem zweiten Bereich eine Teilnehmerkennung und in einem dritten Bereich eine Information über den Zustand des Teilnehmers dargestellt wird. Die Information über den Zustand des Teilnehmers kann ein Alarmsignal, eine Fehlermeldung oder eine Meldung eines störungsfreien Zustands sein.

Wird ein Teilnehmer neu an den Kommunikationskanal 5 angeschlossen, dann stellt er sofort und automatisch dem Kommunikationskanal 5 eine Diagnoseinformation zur Verfügung, die im XML-Format vorliegt und den neu angeschlossenen Teilnehmer identifizierende Kennsignale enthält. Zu diesen Kennsignalen gehören Angaben des Herstellers des Teilnehmers und Angaben über den Typ des Teilnehmers.

Alternativ zur Darstellung der Diagnoseinformationen in Form einer Liste können die Diagnoseinformationen auch in Form einer grafischen Darstellung angezeigt werden. Sind beispielsweise Anlagenhierarchien bekannt, könnte eine vollgrafische Darstellung (Hauptknoten, Unterknoten, Grafiken, etc.) automatisch erzeugt werden.

Beim vorstehend beschriebenen Automatisierungssystem stehen folglich der Umwandlungsstation 1 und der Servicestation 9 ständig alle verfügbaren Diagnosedaten der angeschlossenen Teilnehmer zur Verfügung. Die Umwandlungsstation und die Servicestation 9 können folglich zu beliebigen Zeitpunkten auf diese Daten zugreifen und bei Bedarf Fehlerbehebungsdaten bereitstellen, die in einer Fehlerbehebungskomponente 2c als Reaktion auf die übertragenen Diagnoseinformationen zur Verfügung gestellt werden. Bei den Fehlerbehebungsdaten kann es sich um Daten handeln, mittels derer ein Update der Software eines Teilnehmers erfolgt, um Steuerbefehle, die im jeweiligen Teilnehmer Einstellelemente beeinflussen, oder um Konfigurationsdaten.

Eine vorteilhafte Weiterbildung der Erfindung besteht darin, die Recheneinheit 2 der Umwandlungsstation 1 und der Servicestation 9 jeweils weiterhin mit einer Selektionskomponente 2a auszustatten, bei der es sich um ein Softwarepaket handeln kann. Mittels dieser Selektionskomponente kann unter allen angeschlossenen Teilnehmern eine Selektion durchgeführt werden, aufgrund welcher nur die den selektierten Teilnehmern zugehörigen Diagnoseinformationen auf dem Display angezeigt werden. Beispielsweise besteht die Möglichkeit, sich nur alle Diagnoseinformationen anzeigen zu lassen, die von den Kesseln des Gesamtsystems stammen, oder nur Diagnoseinformationen anzeigen zu lassen, die von Reglern des Automatisierungssystems stammen.

Vorzugsweise weisen die Servicestation 9 und die Umwandlungsstation 1 jeweils eine Bedieneinheit 3 auf, mittels derer ein Bediener Selektionskriterien vorgeben kann. Wird beispielsweise im Laufe eines Prozesses erkannt, dass bestimmte Teilnehmer des Automatisierungssystems des öfteren in kritische Zustände geraten und aus diesem Grund ständig beobachtet werden müssen, dann kann eine Selektion dieser Teilnehmer durch eine Eingabe entsprechender Selektionskriterien mittels der Bedieneinheit 3 programmiert werden.

Nach alledem wird durch die Erfindung ein Automatisierungssystem mit vereinfachter Diagnose und Fehlerbehebung bereitgestellt. Diagnoseinformationen der Teilnehmer des Systems stehen in einheitlicher Form anlagenweit zur Verfügung. Der Zugang zu diesen Informationen erfolgt über einen Web-Server. Die Diagnoseinformationen stehen über ein Netzwerk (Internet, Intranet) einer Servicestation zur Verfügung. Der Standort der Servicestation kann überall dort sein, wo ein Zugang zum Netzwerk gegeben ist. Folglich ist es beim Vorliegen von Störungen in vielen Fällen nicht notwendig, Service-Spezialisten an den Aufstellungsort des jeweils gestörten Teilnehmers reisen zu lassen. Der Service-Spezialist kann anhand der über das Netzwerk übertragenen Diagnoseinformationen auch aus der Ferne Fehlerorte und Fehlerursachen erkennen sowie Möglichkeiten zur Fehlerbehebung vorschlagen.

Eine vorteilhafte Ausgestaltung der Erfindung besteht darin, sowohl die Servicestation 9 als auch die Umwandlungsstation 1 mit einem Display auszustatten und die von den Teilnehmern zur Verfügung gestellten Diagnoseinformationen sowohl vor Ort mittels der Umwandlungsstation als auch in der Servicestation zu beobachten und eine Fehlerbehebung nach Möglichkeit sowohl vor Ort als auch aus der Ferne in die Wege zu leiten.

Eine alternative Ausführungsform der Erfindung besteht darin, die von den Teilnehmern gelieferten Diagnoseinformationen nicht im Teilnehmer selbst, sondern erst in der Umwandlungsstation in das XML-Format umzusetzen.

## Patentansprüche

1. Automatisierungssystem, welches eine Vielzahl von Teilnehmern aufweist, die an einen gemeinsamen Kommunikationskanal angeschlossen sind, wobei
- jeder dieser Teilnehmer (T1,...,T6) die ihm zugehörigen Diagnoseinformationen automatisch auf dem Kommunikationskanal (5) zur Verfügung stellt,
- an den Kommunikationskanal (5) weiterhin eine Umwandlungsstation (1) angeschlossen ist, welche einen Web-Server (2b) aufweist, der die auf dem Kommunikationskanal vorliegenden Diagnoseinformationen in ein einheitliches, webfähiges Format umsetzt,
- die Umwandlungsstation über ein Netzwerk (V) mit einer Servicestation (9) verbunden ist und
- die Servicestation einen Web-Browser und ein mit dem Web-Browser verbundenes Display aufweist, wobei der Web-Browser die über das Netzwerk (V) übertragenen Diagnoseinformationen in ein einheitliches Anzeigeformat umsetzt und das Display zur Anzeige der vom Web-Browser bereitgestellten Diagnoseinformationen vorgesehen ist,
**dadurch gekennzeichnet, dass** die Servicestation (9) und/oder die Umwandlungsstation (10) eine Fehlerbehebungskomponente (2c) enthält, die an ihrem Ausgang Fehlerbehebungsdaten bereitstellt, und dass die Fehlerbehebungskomponente die Fehlerbehebungsdaten automatisch als Reaktion auf empfangene Diagnoseinformationen generiert und an ihrem Ausgang zur Verfügung stellt.

2. Automatisierungssystem nach Anspruch 1, **dadurch gekennzeichnet, dass** jeder der Teilnehmer (T1,...,T6) einen Konverter (8) aufweist, der im Teilnehmer generierte Diagnoseinformationen in ein Standardformat umsetzt.

3. Automatisierungssystem nach Anspruch 1, **dadurch gekennzeichnet, dass** die Umwandlungsstation (1) einen Konverter (8) aufweist, der die in den Teilnehmern generierten Diagnoseinformationen in ein Standardformat umsetzt.

4. Automatisierungssystem nach Anspruch 2 oder 3, **dadurch gekennzeichnet, dass** der Konverter (8) die Diagnoseinformationen in das XML-Format umsetzt.

5. Automatisierungssystem nach einem der vorhergehenden Ansprüche, **dadurch gekennzeichnet, dass** ein Teilnehmer nach seinem Anschluss an den gemeinsamen Kommunikationskanal (5) automatisch Diagnoseinformationen auf dem Kommunikationskanal zur Verfügung stellt, welche den neu angeschlossenen Teilnehmer identifizierende Kennsignale enthalten.

6. Automatisierungssystem nach einem der vorhergehenden Ansprüche, **dadurch gekennzeichnet , dass** die auf dem Display (4) angezeigten Diagnoseinformationen in Form einer Liste oder in Form einer grafischen Darstellung dargestellt werden.

7. Automatisierungssystem nach Anspruch 6, **dadurch gekennzeichnet, dass** in der Displaydarstellung die verschiedenen Teilnehmern zugehörigen Diagnoseinformationen in einem einheitlichen Anzeigeformat angezeigt werden.

8. Automatisierungssystem nach Anspruch 7, **dadurch gekennzeichnet, dass** die Displaydarstellung Diagnoseinformationen enthält, die unabhängig vom Hersteller des jeweiligen Teilnehmers ein einheitliches Anzeigeformat aufweisen.

9. Automatisierungssystem nach einem der vorhergehenden Ansprüche, **dadurch gekennzeichnet , dass** jeder Teilnehmer (T1,...,T6) seine Diagnoseinformationen ständig dem Kommunikationskanal (5) zur Verfügung stellt, so dass die Umwandlungsstation (1) ständigen Zugriff auf die Diagnosedaten aller an den Kommunikationskanal angeschlossenen Teilnehmer hat.

10. Automatisierungssystem nach einem der vorhergehenden Ansprüche, **dadurch gekennzeicnet**, dass die Umwandlungsstation (1) ein mit dem Web-Server (2b) über einen Web-Browser verbundenes Display (4) aufweist, welches zur Anzeige der vom Web-Browser bereitgestellten Diagnoseinformationen vorgesehen ist.

11. Automatisierungssystem nach einem der vorhergehenden Ansprüche, **dadurch gekennzeichnet, dass** die Servicestation (9) und/oder die Umwandlungsstation (1) eine Selektionskomponente (2a) aufweist, mittels derer unter allen angeschlossenen Teilnehmern eine Selektion durchführbar ist, aufgrund welcher nur die den selektierten Teilnehmern zugehörigen Diagnoseinformationen auf dem Display (4) angezeigt werden.

12. Automatisierungssystem nach Anspruch 11, **dadurch gekennzeichnet, dass** die Servicestation (9) und/oder die Umwandlungsstation (1) eine Bedieneinheit (3) aufweist, die zur Eingabe von Selektionskriterien vorgesehen ist.

13. Automatisierungssystem nach einem der vorhergehenden Ansprüche, **dadurch gekennzeichnet , dass** die am Ausgang der Fehlerbehebungskomponente (2c) der Servicestation (9) bereitgestellten Fehlerbehebungsdaten über das Netzwerk (V) und den Kommunikationskanal (5) an einen Teilnehmer übertragbar sind.

14. Automatisierungssystem nach einem der vorhergehenden Ansprüche, **dadurch gekennzeichnet, dass** die am Ausgang der Umwandlungsstation (1) bereitgestellten Fehlerbehebungsdaten über den Kommunikationskanal (5) an einen Teilnehmer übertragbar sind.

15. Automatisierungssystem nach Anspruch 13 oder 14, **dadurch gekennzeichnet, dass** die Fehlerbehebungsdaten Softwaredaten enthalten.

16. Automatisierungssystem nach einem der Ansprüche 13 - 15, **dadurch gekennzeichnet, dass** die Fehlerbehebungsdaten Steuerbefehle oder Konfigurationsdaten enthalten.

17. Automatisierungssystem nach einem der vorhergehenden Ansprüche, **dadurch gekennzeichnet, dass** das Netzwerk das Internet oder ein Intranet ist.

## Claims

1. Automation system featuring a plurality of subscribers which are connected to a common communication channel, with
- each of these subscribers (T1,...,T6) automatically making the diagnostic information pertaining to it available on the communication channel (5),
- a conversion station (1) which features a Web server (2b) which converts the diagnostic information present on the communication channel into a single Web-enabled format being further connected to the communication channel (5),
- the conversion station being connected via a network (V) to a service station (9) and
- the service station featuring a Web browser and a display connected to the Web browser, with the Web browser converting the diagnostic information transmitted over the network (V) into a single display format and the display being provided for displaying diagnostic information supplied by the Web browser.
**characterised in that**
the service station (9) and/or the conversion station (10) contains an error rectification component (2c) which provides error rectification data at its output, and that
the error rectification component automatically generates the error rectification data as a reaction to received diagnostic information and makes it available at its output.

2. Automation system in accordance with claim 1, **characterised in that** each of the subscribers (T1,...,T6) features a converter (8) which converts diagnostic information generated in the subscriber into a standard format.

3. Automation system in accordance with claim 1,
**characterised in that** the conversion station (1) features a converter (8) which converts the diagnostic information generated in the subscriber into a standard format.

4. Automation system in accordance with claim 2 or 3, **characterised in that** the converter (8) converts the diagnostic information into the XML format.

5. Automation system in accordance with one of the previous claims 5, **characterised in that** a subscriber, after its connection to the common communication channel (5) automatically makes available diagnostic information on the communication channel which contains identifying signals identifying the newly connected subscriber.

6. Automation system in accordance with one of the previous claims, **characterised in that** the diagnostic information shown on the display (4) is presented in the form of a list or in the form of a graphical representation.

7. Automation system in accordance with claim 6, **characterised in that** in the display presentation, the diagnostic information associated with the different subscribers is shown in a single display format.

8. Automation system in accordance with claim 7, **characterised in that** the display presentation contains diagnostic information which, regardless of the manufacturer of the subscriber concerned, has a single display format.

9. Automation system in accordance with one of the previous claims, **characterised in that** each subscriber (T1,...,T6) makes its diagnostic information permanently available to the communication channel (1), so that the conversion station (1) has ongoing access to the diagnostic data of all subscribers connected to the communication channel.

10. Automation system in accordance with one of the previous claims, **characterised in that** the conversion station
(1) features a display (4) connected via a Web browser to the Web server (2b) which is used to display the diagnostic information provided by the Web browser.

11. Automation system in accordance with one of the previous claims, **characterised in that** the service station (9) and/or the conversion station (1) features a selection component (2a) by means of which a selection can be made between all connected subscribers on the basis of which only the diagnostic information pertaining to the selected subscribers will be shown on the display (4).

12. Automation system in accordance with claim 11, **characterised in that**, the service station (9) and/or the conversion station (1) features an operation unit (3) which is intended for input of selection criteria.

13. Automation system in accordance with one of the previous claims, **characterised in that** the service station (9) contains an error rectification component (2c) which provides error rectification data at its output which is transmitted via the network (V) and the communication channel (5) to a subscriber.

14. Automation system in accordance with one of the previous claims, **characterised in that** the error rectification data provided at the output of the conversion station (1) can be transmitted via the communication channel (5) to a subscriber.

15. Automation system in accordance with claim 13 or 14, **characterised in that** the error rectification data includes software data.

16. Automation system in accordance with one of the claims 13 - 15, **characterised in that** the error rectification data includes control commands or configuration data.

17. Automation system in accordance with one of the previous claims, **characterised in that** the network is the Internet or an Intranet.

## Revendications

1. Système d'automatisation qui a une pluralité de terminaux raccordés à un canal commun de communication, dans lequel
- chacun de ces terminaux ( T1,...,T6 ) dispose automatiquement sur le canal ( 5 ) de communication d'informations de diagnostic qui lui appartiennent,
- sur le canal ( 5 ) de communication est raccordé, en outre, un poste ( 1 ) de transformation, qui a un serveur ( 2b ) web qui transforme les informations de diagnostic présentes sur le canal de communication en un format unitaire apte à la toile,
- le poste de transformation est relié à un poste ( 9 ) de service par un réseau ( V ) et
- le poste de service a un navigateur web et un affichage relié au navigateur web, le navigateur web transformant les informations de diagnostic transmises par le réseau ( V ) en un format d'affichage unitaire et l'affichage étant prévu pour afficher les informations de diagnostic préparées par le navigateur web,
**caractérisé en ce que** le poste ( 9 ) de service et/ou le poste ( 10 ) de transformation comporte un composant ( 2c ) de suppression d'erreurs, qui procure sur sa sortie des données de suppression d'erreurs et **en ce que** le composant de suppression d'erreurs engendre les données de suppression d'erreurs automatiquement en réaction à des informations de diagnostic reçues et les met à disposition sur sa sortie.

2. Système d'automatisation suivant la revendication 1,
**caractérisé en ce que** chacun des terminaux ( T1,...,T6 ) a un convertisseur ( 8 ) qui transforme des informations de diagnostic engendrées dans le terminal en un format normalisé.

3. Système d'automatisation suivant la revendication 1,
**caractérisé en ce que** le poste ( 1 ) de transformation a un convertisseur ( 8 ) qui transforme les informations de diagnostic engendrées dans les terminaux en un format normalisé.

4. Système d'automatisation suivant la revendication 2 ou 3,
**caractérisé en ce que** le convertisseur ( 8 ) transforme les informations de diagnostic en le format XML.

5. Système d'automatisation suivant l'une des revendications précédentes,
**caractérisé en ce qu'**un terminal, après son raccordement au canal ( 5 ) commun de communication, met automatiquement à disposition des informations de diagnostic sur le canal de communication, qui contiennent des signaux caractéristiques identifiant le terminal raccordé nouvellement.

6. Système d'automatisation suivant l'une des revendications précédentes,
**caractérisé en ce que** les informations de diagnostic affichées sur l'affichage ( 4 ) sont représentées sous la forme d'une liste ou sous la forme d'une représentation graphique.

7. Système d'automatisation suivant la revendication 6,
**caractérisé en ce que**, dans la représentation d'affichage, les informations de diagnostic appartenant aux divers terminaux sont affichées en un format d'affichage unitaire.

8. Système d'automatisation suivant la revendication 7,
**caractérisé en ce que** la représentation d'affichage contient des informations de diagnostic, qui ont un format d'affichage unitaire indépendamment du fabricant du terminal respectif.

9. Système d'automatisation suivant l'une des revendications précédentes,
**caractérisé en ce que** chaque terminal ( T1, ..., T6 ) met ses informations de diagnostic en permanence à la disposition du canal ( 5 ) de communication, de sorte que le poste ( 1 ) de transformation a en permanence accès aux données de diagnostic de tous les terminaux raccordés au canal de communication.

10. Système d'automatisation suivant l'une des revendications précédentes,
**caractérisé en ce que** le poste ( 1 ) de transformation a un affichage ( 4 ) relié au serveur ( 2b ) web par un navigateur web, l'affichage étant prévu pour afficher les informations de diagnostic préparées par le navigateur web.

11. Système d'automatisation suivant l'une des revendications précédentes,
**caractérisé en ce que** le poste ( 9 ) de service et/ou le poste ( 1 ) de transformation ont un composant ( 2a ) de sélection au moyen duquel une sélection entre les terminaux raccordés peut être effectuée, sélection sur la base de laquelle seules les informations de diagnostic appartenant aux terminaux sélectionnés sont affichées sur l'affichage ( 4 ).

12. Système d'automatisation suivant la revendication 11,
**caractérisé en ce que** le poste ( 9 ) de service et/ou le poste ( 1 ) de transformation ont une unité ( 3 ) de service prévue pour l'entrée de critères de sélection.

13. Système d'automatisation suivant l'une des revendications précédentes,
**caractérisé en ce que** les données de suppression d'erreurs préparées à la sortie du composant ( 2c ) de suppression d'erreurs du poste ( 9 ) de service peuvent être transmises à un terminal par le réseau ( V ) et par le canal ( 5 ) de communication.

14. Système d'automatisation suivant l'une des revendications précédentes,
**caractérisé en ce que** les données de suppression d'erreurs préparées à la sortie du poste ( 1 ) de transformation peuvent être transmises à un terminal par le canal ( 5 ) de communication.

15. Système d'automatisation suivant les revendications 13 ou 14,
**caractérisé en ce que** les données de suppression d'erreurs contiennent des données de logiciel.

16. Système d'automatisation suivant l'une des revendications 13 à 15,
**caractérisé en ce que** les données de suppression d'erreurs contiennent des instructions de commande ou des données de configuration.

17. Système d'automatisation suivant l'une des revendications précédentes,
**caractérisé en ce que** le réseau est l'internet ou un intranet.
